(19) **Europäisches Patentamt / European Patent Office / Office européen des brevets**

(11) **EP 4 536 012 B1**

(12) ## EUROPEAN PATENT SPECIFICATION

(45) Date of publication and mention
of the grant of the patent:
**29.07.2026 Bulletin 2026/31**

(21) Application number: **23731647.6**

(22) Date of filing: **08.06.2023**

(51) International Patent Classification (IPC):
**A23L 2/52** *(2006.01)* **A23L 33/16** *(2016.01)*

(52) Cooperative Patent Classification (CPC):
**A23L 33/16; A23L 2/52**

(86) International application number:
**PCT/EP2023/065330**

(87) International publication number:
**WO 2023/242043 (21.12.2023 Gazette 2023/51)**

(54) **AN IRON FORTIFIED INSTANT BEVERAGE COMPOSITION**

MIT EISEN ANGEREICHERTE INSTANTGETRÄNKEZUSAMMENSETZUNG

COMPOSITION DE BOISSON INSTANTANÉE ENRICHIE EN FER

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.06.2022 EP 22178749**

(43) Date of publication of application:
**16.04.2025 Bulletin 2025/16**

(73) Proprietor: **Ekaterra Research and Development UK Limited**
**Sharnbrook, Bedfordshire MK44 1LQ (GB)**

(72) Inventors:
• **GOVINDASAMY, Vadivel**
  Bangalore 560 066 (IN)
• **KUMARAN, Vetri**
  Bangalore 560 066 (IN)
• **PALAGIRI, Swathy**
  Bangalore 560 066 (IN)
• **MHASAVADE, Deepak**
  Bangalore 560 066 (IN)
• **BALAMURUGAN, V**
  Bangalore 560 066 (IN)
• **NAGABHUSHAN, Prakash**
  Bangalore 560 066 (IN)

(74) Representative: **Mewburn Ellis LLP**
**Aurora Building**
**Counterslip**
**Bristol BS1 6BX (GB)**

(56) References cited:
WO-A1-2022/101840    JP-A- 2016 007 137
US-A1- 2009 061 068    US-A1- 2009 124 572
US-A1- 2018 133 267

• MEREDITH C FIDLER ET AL: "A Micronized, Dispersible Ferric Pyrophosphate with H igh Relative Bioavailability in Man", BRITISH JOURNAL OF NUTRITION, UK, vol. 91, no. 1, 1 January 2004 (2004-01-01), pages 107 - 112, XP008152036, ISSN: 0007-1145, [retrieved on 20070309], DOI: 10.1079/BJN20041018
• HURRELL RICHARD: "Linking the bioavailability of iron compounds to the efficacy of iron-fortified foods", INTERNATIONAL JOURNAL FOR VITAMIN & NUTRITION RESEARCH, HOGREFE AND HUBER, BERNE, CH, vol. 77, no. 3, 1 May 2007 (2007-05-01), pages 166 - 173, XP008106830, ISSN: 0300-9831, DOI: 10.1024/ 0300-9831.77.3.166

## Description

### Field of the Invention

The present invention relates to an instant beverage composition. In particular, the present invention relates to an iron fortified instant beverage composition.

### Background and Prior Art

Staying hydrated is believed to bring about many health benefits to both the body and mind. Thus, it is often said that many non-alcoholic beverages are believed to refresh the mind. There are many non-alcoholic beverages available in the market for consumption. Tea and coffee are the most popular out of these.

Polyphenols that are present in tea are also considered to be good for human health. There are varieties of tea available in the market, e.g. black tea, green tea, oolong tea, white tea, *etc.* Black tea is generally prepared by a process which includes the steps of withering, macerating, fermenting, and firing/drying. On the other hand, green tea manufacturing process does not include the step of fermentation. Therefore, the characteristic profile of green tea is different from that of black tea.

Traditionally, tea referred to those products which were obtained from the tea plant *Camellia Sinensis.* However, recently, the definition of tea is now generally accepted to also include any form of herbal infusion. Thus, commonly, these herbal infusions are now referred to as herbal 'teas'.

Herbal teas or herbal infusions are also becoming increasingly popular because of the various health benefits provided by the different herbs. That is, herbal teas are generally rich in antioxidants, vitamins and essential nutrients, compounds which are strongly associated with health benefits, such as relieving stress, boosting immunity, reducing pain and aiding digesting. Thus, herbal teas are seen as a convenient way of delivering these essential nutrients and elements to an individual.

Most of the people in Western and Asian countries drink at least one from of tea or coffee at least once a day, or even more. Therefore, tea and coffee could be one of the ways of delivering nutrients and essentials elements.

Traditionally, such beverages are produced by infusing beverage plant material (e.g. tea leaves, coffee beans etc.) in hot water and separating the aqueous plant extract from the remaining insoluble organic material (plant) material.

Today, however, beverages, such as teas and coffees, can be prepared by more convenient methods which dispense with the need for manipulation of insoluble plant and bean material by the end-user or consumer. In particular, the beverages can be prepared from instant powders or granules which are free from insoluble organic material and so dissolve rapidly and completely on contact with hot water.

Instant beverages are increasingly being seen as convenient means for preparing and consuming non-alcoholic drinks such as teas and coffees. Conveniently, these instant beverages can be quickly and conveniently reconstituted into a cup of tea or coffee simply by the addition of water.

Iron represents one of the most important elements needed for proper functioning of human body. It is an essential element to produce blood in human body. Iron deficiency can lead to anaemia which can become serious if not treated on time. Hence, there are several iron fortified foods products are available in the market.

There are also prior arts which discloses iron fortified food products.

US6998143 (Nestle, 2006) discloses an iron fortification complex which may be used to fortify foods and beverages with iron. The complex is formed of ferric ions and caseinate. The complex is sufficiently stable as to be suitable for use in retorted products. However, despite the stability, the iron in the complexes has substantially the same bioavailability as ferrous sulfate.

WO03032741 (Unilever, 2003) discloses a tea product fortified with a ferrous-plant protein hydrolysate complex. The complex does not cause precipitation of iron-polyphenol; complexes in the tea and is also bioavailable. A tea drink made from the tea of the invention has an attractive colour.

US 2009/061068 A1 (05 March 2009) describes a food product which has been fortified in iron content, having an iron content of at least 5 ppm and comprising iron-containing nanoparticles, wherein the nanoparticles are stabilised by means of a biopolymer provides good bioavailability and stability.

US 2018/133267 A1 (14 May 2009) describes an oral composition comprising at least one probiotic bacteria selected from the genera: Lactobacillus, Bifidobacterium, and Bacillus, and ferric pyrophosphate.

US 2009/124572 A1 (14 May 2009) describes a nutritional supplement, and particularly, an oral nutritional supplement which contains an iron fortificant comprising a ferric pyrophosphate chelate.

JP 2016 007137 A (18 January 2016) describes an iron-containing powder composition which contains at least one selected from the group consisting of: ferric pyrophosphate (A); lecithin (B); and alginic acid, carboxymethyl cellulose, and salts thereof (C).

WO 2022/101840 A1 (19 May 2022) describes an irregular and porous elemental iron powder, which is suitable for fortifying food and pharmaceuticals with iron, and a composition comprising the same.

Fidler et al. (Br. J. Nutr., 2004, Vol. 91, No. 1, pp. 107-112) describes a micronised, dispersible ferric pyrophosphate with and its relative bioavailability in man.

Given the popularity and wide-spread consumption of beverages such as tea and coffee globally, and the growing prevalence of instant beverages, fortifying instant beverages with iron clearly would be beneficial in addressing the deficiency in iron amongst the global population.

However, the present inventors have discovered that fortifying an instant beverage product with iron is particularly problematic. It is believed that this problem arises because compounds (e.g. polyphenols) that are present in tea and coffee react with iron to form precipitates and make the colour of the beverage quite dark in colour. Beverages that are too dark in colour are generally not accepted by consumers.

On the other hand, as most of the people consumes tea and/or coffee more than once in a day, these beverages are a potentially useful source for delivering iron to human body. Hence, the delivery of the iron at the infusions also needs to be adequate.

Thus, there remains a need for an iron fortified instant beverage composition which delivers high amounts of iron to the end cup beverage, ideally whilst also preserving the aesthetic and sensual properties of the instant beverage infusion as far as possible.

## Summary of the invention

In a first aspect, the present invention provides an instant beverage composition comprising:

   a) a micronized iron compound; and,
   b) an instant beverage product,

wherein the particle size of the iron compound is in the range of 2 to 50 micron, and
wherein the instant beverage product is an instant tea product, an instant herbal product, an instant coffee product or an instant cocoa product.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per* se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

## Detailed description of the invention

The disclosure of the invention as found herein will be understood to cover all embodiments as found in the claims and as discussed hereinbelow.

The present invention provides an instant beverage composition comprising:

   a) a micronized iron compound; and,
   b) an instant beverage product,

wherein the particle size of the iron compound is in the range of 2 to 50 micron, and
wherein the instant beverage product is an instant tea product, an instant herbal product, an instant coffee product or an instant cocoa product.

The micronized iron compound has a particle size in the range of 2 to 50 micron. More preferably, the micronized iron compound has a particle size in the range of 2 to 40 micron. Even more preferably, the micronized iron compound has a particle size in the range of 2 to 30 micron. Still more preferably, the micronized iron compound preferably has a particle size in the range of 2 to 20 micron. Yet more preferably, the micronized iron compound preferably has a particle size in the range of 2 to 10 micron. Further preferably, the micronized iron compound preferably has a particle size in the range of 2 to 8 micron. Most preferably, the micronized iron compound preferably has a particle size in the range of 2 to 6 micron.

The term "micron" will be understood to mean 1 micrometre (1 $\mu$m). Thus 0.1 to 10 microns will be understood as referring to a particle size of 0.1 $\mu$m to 10 $\mu$m.

It will also be understood that the particle size referred to herein refers to the (mean) average particle size of the iron compound.

The micronized iron compound may be obtained by any suitable means. For example, the micronized iron compound may be obtained by subjecting a commercially available iron compound to a process of size reduction in order to reduce the average (mean) particle size of the iron compound to an order of microns. Preferably, the process of size reduction will reduce the average (mean) particle size of the iron compound to the preferred particle sizes mentioned hereinabove.

Alternately, the micronized iron compound may be obtained already in a micronized form, and thus in a form which has an average particle size as mentioned hereinabove.

Suitably, the micronized iron compound is insoluble in water or has very limited water solubility. Thus, it is preferred that the solubility of the micronized iron compound in water at 25°C is less than 0.001 g/mL, and more preferably less than 0.0005 g/mL. Most preferably, the micronized iron compound is water insoluble.

The micronized iron compound may preferably be selected from micronized iron oxide, micronized ferric pyrophosphate, micronized carbonyl iron, micronized electrolytic iron and combination thereof. More preferably, the micronized iron compound may be selected from micronized iron oxide, micronized ferric pyrophosphate and a combination thereof. Most preferably, the micronized iron compound is micronized ferric pyrophosphate.

The amount of micronized iron compound present in the instant beverage composition is preferably in the range of 0.1 to 15 %, more preferably 0.1 to 10%, even more preferably, 0.1 to 5%, still more preferably 0.1 to 3%, yet more preferably 0.1 to 3%, and most preferably 0.5 to 1% by weight of the instant beverage composition.

In certain embodiments, the instant beverage (e.g. instant tea) composition may also comprise one or more polysaccharides, preferably two polysaccharides. The first polysaccharide comprises maltodextrin and/or modified starch. In some embodiments, the first polysaccharide comprises maltodextrin, carboxymethylcellulose and/or starch (e.g. modified starch). Preferably, the first polysaccharide is selected from maltodextrin or modified starch. Most preferably, the first polysaccharide is maltodextrin.

The amount of polysaccharide used in the instant beverage composition of the present invention is preferably in the range of 0.1 to 10%, more preferably 0.5 to 5%, still more preferably 1 to 4%, further preferably 2 to 4% and most preferably 2 to 3% by weight of the composition.

Preferably, the ratio of the micronized iron compound to polysaccharide in the instant beverage (e.g. instant tea) composition is between 2:0.8 and 0.8:2, more preferably between 1.5:0.8 and 0.8:1.5, even more preferably between 1.3:0.8 and 0.8:1.3, and most preferably between 1:0.8 and 0.8:1.

Carboxymethyl cellulose (CMC) is a cellulose derivative with carboxymethyl groups (-CH$_2$-COOH) bound to some of the hydroxyl groups of the glucopyranose monomers that make up the cellulose backbone. Carboxymethyl cellulose is a well-known additive, and is commonly used as a thickening agent, binder, stabiliser and the like.

Maltodextrin is a well-known food additive. It is a flavourless substance. It is generally produced from vegetable starch by hydrolysis. The starch is preferably corn or wheat.

The amount of maltodextrin used in the instant beverage composition of the present invention is preferably in the range of 0.5 to 5%, more preferably 1 to 4%, furthermore preferably 2 to 4% and most preferably 2 to 3% by weight of the composition.

Preferably, the ratio of the micronized iron compound to maltodextrin in the instant beverage (e.g. instant tea) composition is between 2:0.8 and 0.8:2. More preferably, the ratio of micronized iron to maltodextrin in the instant beverage (e.g. instant tea) composition is between 1.5:0.8 and 0.8:1.5. Even more preferably, the ratio of micronized iron to maltodextrin in the instant beverage (e.g. instant tea) is between 1.3:0.8 and 0.8:1.3. Most preferably, the ratio of micronized iron to maltodextrin in the instant beverage (e.g. instant tea) composition is between 1:0.8 and 0.8:1.

The term modified starch will be understood as being any naturally occurring starch that is modified by physical, chemical or enzymatic processes. Preferably, the modified starch is acetylated starch, dextrin or cross-linked starch.

The amount of modified starch used in the composition of the present invention is preferably in the range of 0.5 to 5%, more preferably 1 to 4%, furthermore preferably 2 to 4% and most preferably 2 to 3% by weight of the composition.

The instant beverage (e.g. instant tea) composition of the present invention also comprises a second polysaccharide. The second polysaccharide comprises gum arabic and/or xanthan gum. Preferably, the second polysaccharide is selected from gum arabic or xanthan gum. Most preferably, the second polysaccharide is gum arabic. Gum arabic is also commonly known as gum acacia. It is an edible water-soluble gum widely used in food industries as stabilizer and/or thickener.

The amount of gum arabic and/or xanthan gum in the instant beverage (e.g. instant tea) composition of the present invention preferably is in the range of 0.05 to 6%, more preferably 0.1 to 4%, further preferably 0.1 to 3% and most preferably 0.5 to 2% by weight.

In some embodiments, the instant beverage (e.g. instant tea) composition comprises one or more polysaccharides, such as those described hereinabove, and milk powder, as described hereinbelow.

The instant beverage (e.g. instant tea) composition of the present invention comprises an instant beverage product. An instant beverage product preferably means a beverage product which can be prepared from instant powders or granules which are free from insoluble organic material and so dissolve rapidly and completely on contact with hot (boiling) water.

Instant beverages, such as instant coffee and tea powders, are usually produced from aqueous extracts made in the traditional way. These aqueous extracts may then be subjected to a clarification step (such as "de-creaming" used in the manufacture of tea powders) and/or concentrated under vacuum or by reverse osmosis. In the case of granular coffee production, the aqueous extract may also be foamed at this point. The resulting extract is then dried by either spray-drying or freeze-drying. If freeze-drying is used, the extract is usually frozen as a thin layer on a freezing belt before being ground in the frozen state. The resulting granules are usually poured into trays and freeze-dried at low pressure.

The instant beverage product is thus preferably in the form of a powder or granule produced by extracting the beverage product (e.g. tea leaf, coffee etc.) with a solvent (e.g. water), optionally clarifying the extract, and drying it (e.g. spray-drying or freeze-drying) to obtain a powder or granules.

The instant beverage product is thus preferably in the form of a powder or granule, preferably a powder. The instant beverage product may therefore be a powder or granule with an average particle size of 1200 μm or less, preferably 1100 μm or less, and most preferably 1000 μm or less.

The instant beverage product is preferably soluble in water with temperature in the range from 4°C to 100°C, more preferably from 6° C to 90°C and most preferably from 10°C to 80°C.

The instant beverage product is an instant tea product, an instant herbal product, an instant coffee product or an instant cocoa product.

In certain embodiments, the instant beverage product is an instant tea product.

Thus, the instant beverage product may preferably be selected from an instant black tea product, an instant green tea product, an instant matcha tea product, an instant oolong tea product, an instant white tea product and blends thereof. More preferably, the instant beverage product is selected from an instant black tea product, an instant green tea product and an instant matcha tea product, and most preferably an instant black tea product or an instant green tea product.

It will therefore be understood that an instant tea (e.g. black tea) product refers to a powdered or granulated beverage product derived from (black) tea leaves which can dissolve rapidly and completely on contact with hot (boiling) water.

"Tea" for the purposes of the present invention means material from *Camellia sinensis var. sinensis* and/or *Camellia sinensis var. assamica*. Especially preferred is material from var. *assamica* as this has a higher level of tea actives than var. *sinensis.*

"Black tea" refers to substantially fermented tea. "Fermentation" refers to the oxidative and hydrolytic process that tea undergoes when certain endogenous enzymes and substrates are brought together. During this process colourless catechins in the leaves are converted to a complex mixture of yellow and orange to dark-brown polyphenolic substances.

"Green tea" refers to substantially unfermented tea. Green tea has different characteristics than black tea. Green tea liquor is light in colour unlike black tea. Green tea also enriched with catechins and low or no amount of theaflavins.

In some embodiments, the instant beverage product is an instant herbal (tea) product.

For the purpose of the present invention, an instant herbal (tea) product may preferably be any instant (tea) product produced from a herbal plant material which is fit for human consumption. The herbal plant material may preferably comprise the leaves of the plant, roots of the plants, flowers of the plant, fruits of the plants or any other parts of the plants. Preferably, the herbal plant material refers to the leaves of the plant.

Preferably, the instant herbal (tea) product comprises medicinal plants which preferably means plants that have beneficial properties associated with human health.

In certain preferred embodiments, the instant herbal (tea) product is selected from a rooibos (tea) product, a hibiscus (tea) product, a chamomile (tea) product, a rosehip (tea) product, a mint (tea) product, a lemon verbena (tea) product, a chicory (tea) product, an orange (tea) product, a yerba mate (tea) product and combinations thereof.

Preferably, the instant herbal (tea) product is selected from a rooibos (tea) product, a hibiscus (tea) product, a chamomile (tea) product, a rosehip (tea) product, a lemon verbena (tea) product and combinations thereof. More preferably, the instant herbal (tea) product is selected from a rooibos (tea) product, a hibiscus (tea) product, a rosehip (tea) product and combinations thereof. Still more preferably, instant herbal (tea) product is selected from a rooibos (tea) product or a hibiscus (tea) product. Most preferably, the instant herbal (tea) product is a rooibos (tea) product.

In some embodiments, the instant beverage product is an instant tea product blend. That is, in some embodiments, the instant tea product is a blend of the iron fortified instant tea product described herein and a non-iron fortified instant tea product. For example, the blend comprises between 1 and 50 % of the iron fortified instant tea product by weight of the instant tea product. In other embodiments, the instant tea product is a blend of one or more instant tea products or instant herbal products.

In some embodiments, the instant beverage composition may also comprise milk powder. It will be appreciated that any suitable form of milk powder may be used. For example, the milk powder may be skimmed milk powder, semi-skimmed milk powder or whole milk powder.

In some embodiments, the instant beverage composition may also comprise sugar and/or one or more sweeteners. A non-limiting list of examples of possible sweeteners include acesulfame K, aspartame, saccharin, sorbitol, stevia, sucralose and xylitol.

In certain embodiments, the instant beverage composition comprises milk powder and sugar and/or one or more sweeteners.

It will also be understood that the instant beverage composition of the present invention may comprise one or more additional agents. For example, the instant beverage composition may comprise one or more nutrients, flavourings, pH regulators, bulking agents, anti-caking agents (e.g. silicon dioxide), cocoa extract etc.

A non-limiting list of possible flavourings include vanilla, fruit (e.g. strawberry, lemon, berry), ginger, cardamom, all spices, jasmine, tea essence (e.g. earl grey, black tea) and cheese.

A non-limiting list of possible nutrients include vitamins (e.g. vitamin C and vitamin D), minerals (e.g. zinc, calcium, sodium) and essential fatty-acids (e.g. omega-3 and omega-6). Preferably, the one or more additional nutrients is selected from vitamins (e.g. vitamin C and vitamin D) and minerals (e.g. zinc, calcium, sodium), and most preferably from vitamin C, vitamin D and zinc.

A non-limiting list of possible pH regulating agents include potassium and sodium carbonates and bicarbonates, tricalcium phosphate, acetic acid, citric acid, disodium phosphate and potassium phosphate. Preferably, the pH regulating agent is a potassium or sodium carbonate or bicarbonate. More preferably, the pH regulating agent is potassium bicarbonate or sodium bicarbonate. Most preferably, the pH regulating agent is potassium bicarbonate.

A non-limiting list of possible bulking agents include starch, carboxymethyl cellulose and sugar (e.g. dextrose). It will be appreciated that components such as starch and carboxymethyl cellulose may be used both as a binder and a filler. That is, such components may serve several different purposes.

The amount of additional agent (e.g. pH regulating agent) in the composition of the present invention is preferably in the range of 0.05 to 6%, more preferably 0.1 to 4%, even more preferably 0.1 to 3%, still more preferably 0.25 to 2%, and most preferably 0.5 to 1% by weight.

The present invention will now be demonstrated by way of non-limiting examples below. The examples are for illustration only and do not limit the scope of the invention in any manner.

## Examples

(Reference Examples are denoted with a double dagger (‡).)

### End Cup Preparation

0.5 g of instant beverage (either fortified with or without iron) was taken in a mug and 200 mL of boiling water (<50 ppm total dissolved solids, TDS) was poured in it. The dissolved instant beverage was then used for further analysis.

In the case of Instant Matcha Tea, the quantities were slightly different. Thus, for Instant Matcha Tea 1.0 g of instant beverage was taken in a mug and 100 mL of boiling water (<50 ppm TDS) was poured in it.

### Materials Used

The instant tea materials used in the examples below, were provide from the following sources.

Instant Black Tea = Fresh tea leaf was obtained from Kenyan plantation. Instant black tea product was prepared by using standard process of preparing instant black tea product.

Instant Green Tea = Fresh tea leaf was obtained from Kenyan plantation.

Instant green tea product was prepared by using standard process of preparing instant green tea product.

Japanese Matcha Tea = Lipton ® Matcha tea from UK

Instant Hibiscus = Martin Bauer Instant Powder from UK

Instant Rooibos = Fresh rooibos leaf was obtained from South Africa. Instant rooibos tea product was prepared by using standard process of preparing instant green tea product

Iron Trichloride ($FeCl_3$) = Merck

Iron Pyrophosphate (FePP) = Merck

Iron Oxide ($Fe_2O_3$) = Merck

Iron Carbonyl = Merck

Electrolytic Iron =Merck

The Iron Trichloride ($FeCl_3$) used herein was non-micronized and thus had an average particle size of greater than 100 $\mu$m.

Iron Fortification Procedure

4 mg of iron and 0.5 g of instant beverage were mixed thoroughly for between 30 seconds and 1 minute to give the iron fortified instant beverage.

The specific instant beverage and iron source used for each example are detailed in Tables 1 to 9 below.

Colour Measurements

Colour was measured using Konica Minolta CM5 Spectrophotometer using the transmittance mode and using a 1 cm quartz cuvette.

The instrument was calibrated using the standard white tile black light trap.

The a* and b* values were then measured using the following procedure:

Tea infusions as prepared above was filled up to the brim in the cuvette and placed in the instrument for colour measurement. The instrument was calibrated using a standard white tile black light trap in accordance with the instructions provided in the instruction manual. The L*a*b* values were measured at room temperature (25°C).

The a* and b* axes have no specific numerical limits. Positive a* is red and negative a* is green. The higher the a* value, the redder the infusion appears. Similarly, positive b* is yellow and negative b* is blue. The higher the b* value, the brighter the infusion appears.

Iron Analysis

0.5 g of instant beverage was taken in a mug and 200 mL of boiling water was poured in to make the end cup. Then, 10 ml of liquid (in the form of a dispersion) was taken from the end cup for iron estimation.

Iron estimation was conducted using Inductively Coupled Plasma Optical Emission Spectroscopy (ICP-OES) spectral analysis as described below.

Inductively Coupled Plasma Optical Emission Spectroscopy (ICP-OES)

The ICP-OES instrument used was Agilent 5110.

The ICP-OES instrument was calibrated using a 2.5% suprapur nitric acid calibration sample.

Multielement standard solutions were obtained from Merck at a concentration of 1000 ppm. These standard solutions were diluted to 1 ppb to 1ppm and peak intensity for iron was calibrated using a wavelength of 238.2 nm.

Samples were prepared by weighing out 5 g of the infusion and adding to a microwave digestor tube together with a 5mL aliquot of concentrated $HNO_3$. This mixture was then digested for 60 minutes at 90 °C. The solution was then made up to 20 mL. No filtering was required unless there were some visible particles. The sample was then injected into the instrument for analysis.

Instant Tea Fortification

Instant black tea, instant green tea and instant match tea were each fortified with iron using the iron fortification procedure outlined above.

The colour of the end cup beverage was then assessed using the protocol described above.

The colour of instant tea beverages with and without iron were compared, together with a comparison of beverages fortified with insoluble micronized iron and soluble non-micronized iron. The results are presented in Tables 1 to 3 below.

**Table 1:** Comparison of end cup colour of various instant black tea (IBT) products fortified with or without different forms of iron.

| Example | Beverage | Iron Source | Particle size | Dosed Iron (mg/cup) | L* | a* | b* | ΔE |
|---------|----------|-------------|---------------|---------------------|------|------|------|----|
| 1(‡) | IBT | None | - | - | 74.3 | 18.7 | 69.3 | |
| 2(‡) | IBT | $FeCl_3$ | - | 4 | 46.7 | 15.4 | 45.8 | 36 |

(continued)

| Example | Beverage | Iron Source | Particle size | Dosed Iron (mg/cup) | L* | a* | b* | ΔE |
|---|---|---|---|---|---|---|---|---|
| 3(‡) | IBT | $Fe_2O_3$ | <2 um | 4 | 72.7 | 19.5 | 70.0 | 2 |
| 4 | IBT | Electrolytic Iron | 7-9um | 4 | 74.1 | 18.5 | 68.7 | 1 |
| 5 | IBT | FePP | 2-5um | 4 | 70.7 | 18.2 | 65.4 | 5 |

**Table 2:** Comparison of end cup colour of various instant green tea (IGT) products fortified with or without different forms of iron.

| Example | Beverage | Iron Source | Particle Size | Dosed Iron (mg/cup) | L* | a* | b* | ΔE |
|---|---|---|---|---|---|---|---|---|
| 6(‡) | IGT | None | - | - | 86.2 | 12.0 | 25.3 | |
| 7(‡) | IGT | $FeCl_3$ | - | 4 | 46.8 | 1.57 | 14.8 | 52.0 |
| 8(‡) | IGT | $Fe_2O_3$ | <2 um | 4 | 86.4 | 0.19 | 46.8 | 1.5 |
| 9 | IGT | Electrolytic Iron | 7-9um | 4 | 86.8 | 0.13 | 46.6 | 1.7 |
| 10 | IGT | FePP | 2-5um | 4 | 82.8 | 0.38 | 44.5 | 5.4 |

**Table 3:** Comparison of end cup colour of various instant Japanese matcha tea (IJMT) products fortified with or without different forms of iron (using 1g of instant tea product in 100 ml of boiled water).

| Example | Beverage | Iron Source | Particle Size ($\mu$m) | Dosed Fe (mg/cup) | L* | a* | b* | ΔE |
|---|---|---|---|---|---|---|---|---|
| 11(‡) | IJMT | None | - | - | 14.4 | 7.99 | 23.35 | |
| 12(‡) | IJMT | $FeCl_3$ | - | 4 | 0.62 | 0.61 | 0.45 | 27.7 |
| 13 | IJMT | FePP | 2-5um | 4 | 12.8 | 7.84 | 20.74 | 3.1 |

As can be seen from the data in Tables 1 to 3 above, instant tea products fortified with micronized iron sources surprisingly and beneficially produce end cup infusions with minimal colour change compared to the control. On the contrary, instant tea products fortified with soluble non-micronized forms of iron, such as FeCl3, displayed a significant colour change and darkening in colour compared to the control, as evidenced, for example, by the increase in ΔE value and decrease in b* value.

Instant Herbal Compositions

A selection of instant herbal products were each fortified with iron using the iron fortification procedure outlined above.

The colour of instant herbal products with and without iron were compared, together with a comparison of instant herbal products fortified with insoluble micronized iron and soluble non-micronized iron. The results are presented in Tables 4 and 5 below.

**Table 4:** Comparison of end cup colour of various instant hibiscus tea (IHT) products fortified with or without different forms of iron.

| Example | Beverage | Iron Source | Particle Size ($\mu$m) | Dosed Fe (mg / cup) | L* | a* | b* | ΔE |
|---|---|---|---|---|---|---|---|---|
| 14(‡) | IHT | None | - | - | 54.3 | 49.5 | 38.2 | |
| 15(‡) | IHT | $FeCl_3$ | - | 4 | 48.9 | 43.2 | 34.8 | 9.0 |
| 16 | IHT | FePP | 2-5um | 4 | 53.5 | 48.9 | 38.2 | 1.1 |

**Table 5:** Comparison of end cup colour of various instant rooibos tea (IRT) products fortified with or without different forms of iron.

| Example | Beverage | Iron Source | Particle Size ($\mu$m) | Dosed Fe (mg / cup) | L* | a* | b* | ΔE |
|---|---|---|---|---|---|---|---|---|
| 17(‡) | IRT | None | - | - | 76.3 | 15.9 | 79.5 | |

(continued)

| Example | Beverage | Iron Source | Particle Size (μm) | Dosed Fe (mg / cup) | L* | a* | b* | ΔE |
|---|---|---|---|---|---|---|---|---|
| 18(‡) | IRT | FeCl₃ | - | 4 | 48.2 | 16.4 | 62.6 | 33 |
| 19 | IRT | FePP | 2-5 | 4 | 75.4 | 16.3 | 79.5 | 1.0 |

As can be seen from the data in Tables 4 and 5 above, instant herbal products fortified with micronized iron sources also surprisingly and beneficially produce end cup infusions with minimal colour change compared to the control.

Particle Size

The influence of particle size of the micronized iron used to prepare the iron fortified instant beverage compositions of the invention was next assessed. Here, both infusion colour of the end cup and iron delivery to the end cup were assessed. The results are presented in Tables 7 to 10 below.

**Table 7:** Comparison of end cup colour of various instant black tea (IBT) products fortified with or without micronized iron of different average particle size.

| Example | Beverage | Iron Source | Average Particle size (μm) | Dosed Iron (mg/cup) | L* | a* | b* | ΔE |
|---|---|---|---|---|---|---|---|---|
| 25(‡) | IBT | None | - | - | 74.3 | 18.7 | 69.3 | |
| 26 | IBT | FePP | 2-5 | 4 | 70.7 | 18.2 | 65.4 | 5 |
| 27(‡) | IBT | FePP | 50-150 | 4 | 72.2 | 18.7 | 68.0 | 2 |

**Table 8:** Comparison of iron delivery for various instant black tea (IBT) products fortified with or without micronized iron of different average particle size.

| Example | Beverage | Iron Source | Particle size (μm) | Dosed Iron (mg/cup) | Iron in liquid suspensio n (mg/cup) | % Iron in liquid suspension |
|---|---|---|---|---|---|---|
| 26 | IBT | FePP | 2-5 | 4 | 2.3 | 58 |
| 27(‡) | IBT | FePP | 50-150 | 4 | 1.2 | 31 |

**Table 9:** Comparison of end cup colour of various instant green tea (IGT) products fortified with or without micronized iron of different average particle size.

| Example | Beverage | Iron Source | Particle size (μm) | Dosed Iron (mg/cup) | L* | a* | b* | ΔE |
|---|---|---|---|---|---|---|---|---|
| 28(‡) | IGT | None | - | - | 74.3 | 18.7 | 69.3 | |
| 29 | IGT | FePP | 8 | 4 | 82.8 | 0.38 | 44.5 | 5.4 |
| 30 | IGT | FePP | 30 | 4 | - | - | - | - |
| 31 | IGT | FePP | 50 | 4 | 85.4 | -0.47 | 43.4 | 5.0 |

**Table 10:** Comparison of iron delivery for various instant green tea (IGT) products fortified with or without micronized iron of different average particle size.

| Example | Beverage | Iron Source | Particle size (μm) | Dosed Iron (mg/cup) | Iron in liquid suspension (mg/cup) | % Iron in liquid suspension |
|---|---|---|---|---|---|---|
| 29 | IGT | FePP | 8 | 4 | 3 | 72.1 |
| 30 | IGT | FePP | 30 | 4 | 2.5 | 62.1 |
| 31 | IGT | FePP | 50 | 4 | 1.5 | 37.5 |

As can be seen from the data in Tables 7 to 10 above, instant beverage products (e.g. instant tea products) fortified with micronized iron with a particle size of between 0.1 and 50 microns surprisingly and beneficially deliver a greater percentage of iron to the end cup compared to instant beverage products (e.g. instant tea products) fortified with micronized iron with larger particle sizes.

***Additional experimental data***

The following additional instant tea compositions were prepared using the methods and materials described hereinbelow.

*Materials Used*

The instant tea materials used in the examples below, were provide from the following sources.

Instant Black Tea = Lipton Yellow Label Instant Black Tea from Kenya
Instant Green Tea = Lipton Yellow Label Instant Green Tea from Kenya
Matcha green Tea = Lipton Matcha green tea from Japan
Nestle Everyday Milk whitener, skimmed milk powder from Nestle.
White sugar = Paris Agro India pvt ltd
Ferric pyrophosphate = Dr Paul Lohmann Germany
Potassium bicarbonate = Rishi chemicals India pvt ltd
Sodium Carboxymethyl cellulose = Rohini packers India pvt ltd
Maltodextrin = Roquette
Starch =Potato starch from Sigma Aldrich

*Reference Examples 32 and 33 - Iron fortified instant tea*

96.8 g of instant black tea or instant green tea, both obtained from Kenya, was dry blended with 3.2 g of ferric pyrophosphate (average particle size = 300 nm) using a Hobart mixer for 5 minutes to yield iron fortified instant tea samples (reference example 32 and reference example 33 respectively). 0.5 g of each mixture was then taken for end cup preparation.
Samples of instant black tea and instant green tea without any iron added were used as control samples (C1 and C2 respectively).

*Reference Example 34 - Iron fortified Matcha green tea*

98.4 g of instant Japanese matcha tea was dry blended with 1.6 g of ferric pyrophosphate (average particle size = 300 nm) using a Hobart mixture. 1 g of mixture was then taken for end cup preparation (as described hereinabove).
A sample of instant Japanese matcha tea without iron added was used as a control (C3).

*Example 35 - Iron fortified instant milk tea premix with carboxy methyl cellulose*

60 g of white sugar, 32.6 g of skimmed milk powder, 6.2 g of instant black tea (Kenyan origin), 0.2 g of potassium bicarbonate, 0.11 g of ferric pyrophosphate (average particle size = 2-5 um) and 0.9 g of carboxy methyl cellulose were dry blended using a Hobart mixer for 5 minutes. 15 g of the homogenised mixture was then used to prepare the end cup as per the protocol (as described hereinbelow).
A sample prepared as above without the addition of carboxy methyl cellulose was used as a control (C4).

*Example 36 - Iron fortified instant milk tea premix with maltodextrin*

60 g of white sugar, 31 g of skimmed milk powder, 6.2 g of instant black tea (Kenyan origin), 0.2 g of potassium bicarbonate, 0.11 g of ferric pyrophosphate (average particle size = 2-5 um) and 2.6 g of maltodextrin were dry blended using a Hobart mixer for 5 minutes. 15 g of the homogenised mixture was then used to prepare the end cup as per the protocol mentioned (as described hereinbelow).
A sample prepared as above without the addition of maltodextrin was used as a control (C4).

*Example 37 - Iron fortified instant milk tea premix with starch*

60 g of white sugar, 31 g of skimmed milk powder, 6.2 g of instant black tea (Kenyan origin), 0.2 g of potassium bicarbonate, 0.11 g of ferric pyrophosphate (average particle size = 2-5 um) and 2.6 g of starch (potato starch) were dry blended using a Hobart mixer for 5 minutes. 15g of the homogenised mixture was then used to prepare the end cup as per the protocol mentioned (as described hereinbelow)

A sample prepared as above without the addition of starch was used as a control (C4).

*End cup preparation of instant tea milk tea premix.*

15 g of instant beverage mix was taken in a mug and 150 mL of boiling water (<50 ppm TDS) was poured in to make the end cup and stirred well for 1-2 minutes. Then, 20 ml of liquid (in the form of a dispersion) was taken from the end cup for iron estimation and colour measurements.

**Estimation of iron for the instant iron fortified teas**

*Instrument details: ICP OES: Model name Agilent 5110*

Calibration of Instrument:

Calibration blank used is 2.5% suprapur nitric acid for ICP-OES. Multielement standard solutions are available from Merck with concentration of 1000 ppm. This can be diluted to 1 ppb - 1 ppm for Fe and peak intensity was obtained by setting specific wavelength. Calibration curve can be obtained for each element.

This can be used to obtain the concentration in unknown sample using the formula.

$$\text{Concentration (ppb)} = \text{Peak Intensity / Slope}$$

Wavelength to be used for calibration and sample analysis for ICP-OES

| Element | Wavelength to be used (nm) |
|---------|----------------------------|
| Fe | 238.2 nm |

Standards used for calibration:

| Element | Source of standard |
|---------|--------------------|
| Fe | Multi-element standard from Merck (1000 ppm) |

*Sample preparation using microwave digesting method:*

Weigh out 5 g of the infusion and aliquot 5 mL of con. $HNO_3$ to microwave digestor tube. This mixture was digested for 60 minutes at 90 °C. The solution was made up to 20 mL, no filtering required unless there are some particles visible. The sample can then be injected as such or diluted depending on the concentration of element and the sensitivity of the instrument.

*Results*

The colour of instant tea beverages with and without iron with an average particle size of 300 nm were compared. The results are presented in Table 11 below.

**Table 11:** Comparison of end cup colour of various instant black tea (IBT), instant green tea (IGT) and instant Japanese Matcha tea (IJMT) products fortified with or without micronized iron with an average particle size of 300 nm.

| Example | Beverage | Iron Source | Average Particle size (nm) | Dosed Iron (mg/cup) | L* | a* | b* | ΔE |
|---------|----------|-------------|-----------------------------|---------------------|------|------|------|----|
| C1(‡) | IBT | FePP | | | 65.2 | 21.6 | 66.5 | |
| 32(‡) | IBT | FePP | 300 | 4 | 55.6 | 20.1 | 58.1 | 13 |

(continued)

| Example | Beverage | Iron Source | Average Particle size | Dosed Iron (mg/cup) | L* | a* | b* | ΔE |
|---|---|---|---|---|---|---|---|---|
| C2(‡) | IGT | FePP | | | 74.5 | 16.4 | 24.1 | |
| 33(‡) | IGT | FePP | 300 | 4 | 67.3 | 8.5 | 16.0 | 13 |
| C3(‡) | IJMT | FePP | | | 45.0 | 0.9 | 47.5 | |
| 34(‡) | IJMT | FePP | 300 | 4 | 37.6 | 1.9 | 42.9 | 9 |

Next, the amount of iron retained on several instant tea milk tea premixes was evaluated. Here, iron retention for iron fortified instant milk tea premixes with and without certain binders was evaluated by letting each premix stand for 30 minutes at 25 °C and measuring the difference in the amount of iron on the instant tea milk tea premixes before and after standing. The results are presented in Table 12 below.

**Table 12:** Measure of iron retention on several instant milk tea premixes using different binder compositions.

| Example | Dosed Iron (mg /cup) | Amount of Iron suspended in end cup after 30 min standing (in mg) | % Retention |
|---|---|---|---|
| C4 | 3.66 | 0.96 | 26 |
| 35 | 3.64 | 2.84 | 98 |
| 36 | 4.04 | 3.27 | 81 |
| 37 | 3.22 | 3.15 | 78 |

As can be seen from the above table, the retention of iron on instant milk tea premixes is significantly improved using a binder as per the present invention.

**Table 13:** Comparison of end cup colour of instant milk tea premix with and without a carboxy methyl cellulose binder.

| Example | L* | a* | b* | Delta E |
|---|---|---|---|---|
| Control | 49.31 | 8.42 | 15.77 | |
| 35 | 49.96 | 8.43 | 16.44 | 0.9 |

As can be seen from the above data, using a binder (such as carboxy methyl cellulose) has little to no effect on the colour of the tea infusion colour.

From the description of the invention it is clear that by way of present invention it is now possible to provide an iron fortified instant beverage composition with substantial amount of iron being delivered at each cup of beverages without any significant change in colour of the end beverage.

**Claims**

1. An instant beverage composition comprising;

   a) a micronized iron compound; and
   b) an instant beverage product,
   wherein the particle size of the iron compound is in the range of 2 to 50 micron, and
   wherein the instant beverage product is an instant tea product, an instant herbal product, an instant coffee product or an instant cocoa product.

2. An instant beverage composition according to claim 1, wherein the particle size of the iron compound is in the range of 2 to 20 micron, preferably in the range of 2 to 10 micron.

3. An instant beverage composition according to claim 1, wherein the solubility of the iron compound in water at 25 °C is less than 0.001 g/ mL.

4. The instant beverage composition according to any one of the preceding claims, wherein the micronized iron compound is selected from micronized iron oxide, micronized ferric pyrophosphate, micronized carbonyl iron, micronized electrolytic iron and combination thereof.

5. The instant beverage composition according to any one of the preceding claims, wherein the micronized iron compound is micronized ferric pyrophosphate.

6. The instant beverage composition according to any one of the preceding claims, wherein the instant beverage is an instant tea product.

7. The instant beverage composition according to claim 6, wherein the instant tea product is an instant black tea product or an instant green tea product.

8. The instant beverage composition according to claim 6, wherein the instant tea product is an instant herbal product.

9. The composition according to claim 8, wherein the herbal product is an instant rooibos product.

10. The instant beverage composition according to any one of claims 1 to 5, wherein the instant beverage is an instant coffee product.

11. The instant beverage composition according to any one of the preceding claims, wherein the micronized iron compound is present in the range of 0.1 to 4 % by weight of the instant beverage composition.

12. The instant beverage composition according to any one of the preceding claims, wherein the instant beverage further comprises milk powder.

13. The instant beverage composition according to any one of the preceding claims, wherein the instant beverage further comprises sugar and/or a sweetener.

14. The instant beverage composition according to any one of the preceding claims, wherein the instant beverage further comprises one or more nutrient, flavouring and/or pH regulator.


**Patentansprüche**

1. Instant-Getränkezusammensetzung, umfassend:

    (a) eine mikronisierte Eisenverbindung; und
    (b) ein Instant-Getränkeprodukt,
    wobei die Teilchengröße der Eisenverbindung im Bereich von 2 bis 50 $\mu$m liegt und
    wobei das Instant-Getränkeprodukt ein Instant-Teeprodukt, ein Instant-Kräuterprodukt, ein Instant-Kaffeeprodukt oder ein Instant-Kakaoprodukt ist.

2. Instant-Getränkezusammensetzung nach Anspruch 1, wobei die Teilchengröße der Eisenverbindung im Bereich von 2 bis 20 $\mu$m, vorzugsweise im Bereich von 2 bis 10 $\mu$m, liegt.

3. Instant-Getränkezusammensetzung nach Anspruch 1, wobei die Löslichkeit der Eisenverbindung in Wasser bei 25 °C kleiner als 0,001 g/ml ist.

4. Instant-Getränkezusammensetzung nach einem der vorangegangenen Ansprüche, wobei die mikronisierte Eisenverbindung aus mikronisiertem Eisenoxid, mikronisiertem Eisenpyrophosphat, mikronisiertem Carbonyleisen, mikronisiertem elektrolytischem Eisen und Kombinationen daraus ausgewählt ist.

5. Instant-Getränkezusammensetzung nach einem der vorangegangenen Ansprüche, wobei die mikronisierte Eisenverbindung mikronisiertes Eisenpyrophosphat ist.

6. Instant-Getränkezusammensetzung nach einem der vorangegangenen Ansprüche, wobei das Instant-Getränk ein Instant-Teeprodukt ist.

**7.** Instant-Getränkezusammensetzung nach Anspruch 6, wobei das Instant-Teeprodukt ein Instant-Schwarzteeprodukt oder ein Instant-Grünteeprodukt ist.

**8.** Instant-Getränkezusammensetzung nach Anspruch 6, wobei das Instant-Teeprodukt ein Instant-Kräuterprodukt ist.

**9.** Zusammensetzung nach Anspruch 8, wobei das Kräuterprodukt ein Instant-Rooibosprodukt ist.

**10.** Instant-Getränkezusammensetzung nach einem der Ansprüche 1 bis 5, wobei das Instant-Getränk ein Instant-Kaffeeprodukt ist.

**11.** Instant-Getränkezusammensetzung nach einem der vorangegangenen Ansprüche, wobei die mikronisierte Eisenverbindung im Bereich von 0,1 bis 4 Gew.-% der Instant-Getränkezusammensetzung vorhanden ist.

**12.** Instant-Getränkezusammensetzung nach einem der vorangegangenen Ansprüche, wobei das Instant-Getränk weiters Milchpulver umfasst.

**13.** Instant-Getränkezusammensetzung nach einem der vorangegangenen Ansprüche, wobei das Instant-Getränk weiters Zucker und/oder einen Süßstoff umfasst.

**14.** Instant-Getränkezusammensetzung nach einem der vorangegangenen Ansprüche, wobei das Instant-Getränk weiters einen oder mehrere Nährstoffe, Geschmacksstoffe und/oder pH-Regulierungsmittel umfasst.

**Revendications**

**1.** Composition de boisson instantanée, comprenant :

a) un composé de fer micronisé ; et
b) un produit de boisson instantanée,
dans lequel la taille de particule du composé de fer est dans la plage de 2 à 50 microns, et
dans lequel le produit de boisson instantanée est un produit à base de thé instantané, un produit à base de plantes instantané, un produit à base de café instantané ou un produit à base de cacao instantané.

**2.** Composition de boisson instantanée selon la revendication 1, dans laquelle la taille de particule du composé de fer est dans la plage de 2 à 20 microns, de préférence dans la plage de 2 à 10 microns.

**3.** Composition de boisson instantanée selon la revendication 1, dans laquelle la solubilité du composé du fer dans l'eau à 25°C est inférieure à 00,01 g/mL.

**4.** Composition de boisson instantanée selon l'une quelconque des revendications précédentes, dans laquelle le composé de fer micronisé est choisi parmi l'oxyde de fer micronisé, le pyrophosphate ferrique micronisé, le fer carbonyle micronisé, le fer électrolytique micronisé et une combinaison de ceux-ci.

**5.** Composition de boisson instantanée selon l'une quelconque des revendications précédentes, dans laquelle le composé de fer micronisé est du pyrophosphate ferrique micronisé.

**6.** Composition de boisson instantanée selon l'une quelconque des revendications précédentes, dans laquelle la boisson instantanée est un produit de thé instantané.

**7.** Composition de boisson instantanée selon la revendication 6, dans laquelle le produit de thé instantané est un produit de thé noir instantané ou un produit de thé vert instantané.

**8.** Composition de boisson instantanée selon la revendication 6, dans laquelle le produit de thé instantané est un produit à base de plantes instantané.

**9.** Composition selon la revendication 8, dans laquelle le produit à base de plantes est un produit à base de rooibos instantané.

**10.** Composition de boisson instantanée selon l'une quelconque des revendications 1 à 5, dans laquelle la boisson instantanée est un produit à base de café instantané.

**11.** Composition de boisson instantanée selon l'une quelconque des revendications précédentes, dans laquelle le composé de fer micronisé est présent dans la plage de 0,1 à 4 % en poids de la composition de boisson instantanée.

**12.** Composition de boisson instantanée selon l'une quelconque des revendications précédentes, dans laquelle la boisson instantanée comprend en outre du lait en poudre.

**13.** Composition de boisson instantanée selon l'une quelconque des revendications précédentes, dans laquelle la boisson instantanée comprend en outre du sucre et/ou un édulcorant.

**14.** Composition de boisson instantanée selon l'une quelconque des revendications précédentes, dans laquelle la boisson instantanée comprend en outre un ou plusieurs nutriments, arômes et/ou régulateurs de pH.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6998143 B, Nestle
- WO 03032741 A, Unilever
- US 2009061068 A1
- US 2018133267 A1
- US 2009124572 A1
- JP 2016007137 A
- WO 2022101840 A1

**Non-patent literature cited in the description**

- **FIDLER et al.** *Br. J. Nutr.*, 2004, vol. 91 (1), 107-112